# EUROPEAN PATENT APPLICATION

(11) **EP 4 768 158 A1**
(43) Date of publication of application: **01.07.2026**
(21) Application number: 25205994.4
(22) Date of filing: 01.10.2025
(51) Int. Cl.: B23B 31/20

(54) **SHOCK-ABSORBING COLLET CHUCK HOLDER**

(30) Priority: 31.12.2024 TW 113151776
(71) Applicant: Everinn International Co., Ltd., Taichung City 40760 (TW)
(72) Inventor: WU, Tsung-Hsin, Taichung City 40760 (TW)
(74) Representative: Cohausz & Florack

(57) **Abstract**

A shock-absorbing collet chuck holder mountable on a spindle device (8) for holding a cutting tool (7) includes a chuck member (2), a collet member (3), a collet nut (4) and a grip sleeve (5). The chuck member (2) extends along an axis (L) and includes a chuck section (21), a cutter section (23) and a grip section (22). The collet member (3) is coaxially engaged with the cutter section (23). The collet nut (4) is movably engaged with the cutter section (23). By moving engagement of the collet nut (4) toward the chuck section (21), the collet member (3) is pressed inwardly to tighten the cutting tool (7). The collet nut (4) and the grip sleeve (5) are made of an engineering plastic material. The grip sleeve (5) is disposed on the grip section (22) to be gripped by an auto-tool device or a robotic arm.

## Description

The disclosure relates to a collet chuck holder for clamping a workpiece or a cutting tool, and more particularly to a shock-absorbing collet chuck holder.

A conventional collet chuck holder generally includes a chuck member made from a high-strength steel and adapted to be mounted on a spindle device, a collet member adapted for clamping a cutting tool, and a collet nut threadedly engaged with the chuck member for pressing and tightening a collet. By operating the collet nut, the collet is pressed inwardly toward the chuck member so as to tighten the cutting tool.

With tightening of the collet nut, the collet nut, the cutting tool, the chuck member and the spindle device are cooperatively assembled to form a tightening structure such that a force applied to the cutting tool is transmitted to the spindle device, which is critical and an expensive component for a processing machine and requires high precision. Thus, the processing and maintenance costs of the spindle device are high. Moreover, the collet nut which is generally made from a high-strength steel has a high processing cost and a high structural strength. When the cutting tool collides with other components of the processing machine, a great force is undesirably transmitted from the collet nut to the spindle device, thereby causing deflection of components and damage of the spindle device. In addition, the spindle device has many components, which makes maintenance and disassembly of the spindle device complicated. Cost of replacing the collet nut is high, which also contributes to the high maintenance costs.

Therefore, an object of the disclosure is to provide a shock-absorbing collet chuck holder that can reduce the maintenance costs.

According to an aspect of the disclosure, there is provided a shock-absorbing collet chuck holder according to claim 1.

With the collet nut being made of an engineering plastic material, the collet nut may be easily broken by vibration and impact generated by the operational processes. Once the collet nut is broken, the tightening structure of the assembled cutting tool, the collet nut and the collet member is also broken. Thus, a force applied to the cutting tool and transmitted to the spindle device is reduced, thereby reducing damage to the spindle device. Moreover, the grip sleeve made of an engineering plastic material is lighter in weight and has a lower processing cost, so the cost of the material and maintenance costs are lower.

Other features and advantages of the disclosure will become apparent in the following detailed description of the embodiments with reference to the accompanying drawings. It is noted that various features may not be drawn to scale.

FIG. 1 is a sectional view illustrating an embodiment of a shock-absorbing collet chuck holder according to the disclosure disposed on a spindle device.

FIG. 2 is a perspective view of the embodiment holding a cutting tool.

FIG. 3 is an exploded perspective view of the embodiment.

FIG. 4 is a sectional view of the embodiment holding a cutting tool.

FIG. 5 is a sectional view illustrating another embodiment of the shock-absorbing collet chuck holder according to the disclosure holding a cutting tool.

Before the disclosure is described in greater detail, it should be noted that where considered appropriate, reference numerals or terminal portions of reference numerals have been repeated among the figures to indicate corresponding or analogous elements, which may optionally have similar characteristics.

It should be noted herein that for clarity of description, spatially relative terms such as "top," "bottom," "upper," "lower," "on," "above," "over," "downwardly," "upwardly" and the like may be used throughout the disclosure while making reference to the features as illustrated in the drawings. The features may be oriented differently (e.g., rotated 90 degrees or at other orientations) and the spatially relative terms used herein may be interpreted accordingly.

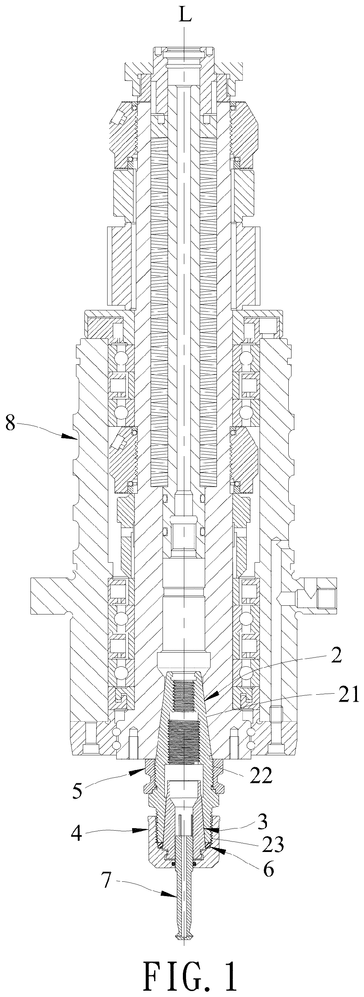

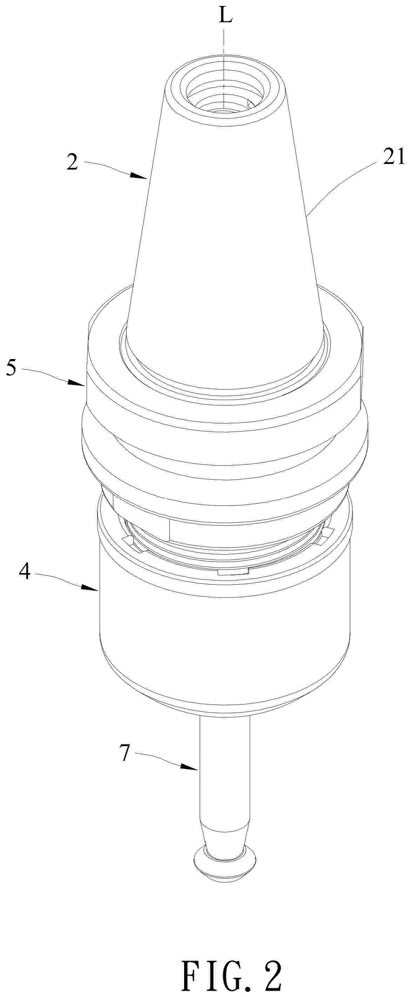

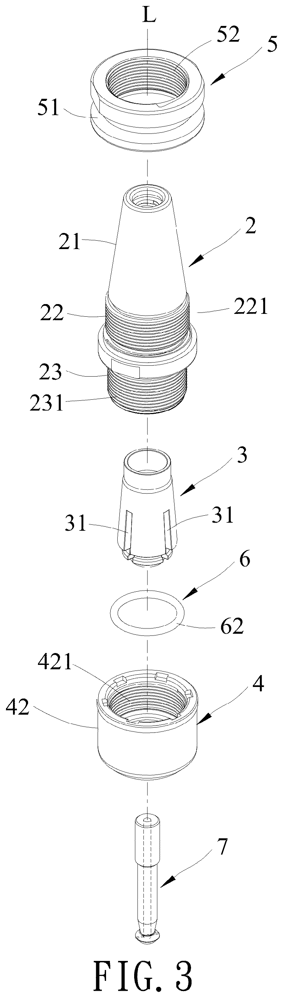

Referring to FIGS. 1, 2 and 3, an embodiment of a shock-absorbing collet chuck holder according to the disclosure is mountable on a spindle device 8 and holds a cutting tool 7. The shock-absorbing collet chuck holder includes a chuck member 2, a collet member 3, a collet nut 4, a grip sleeve 5 and a watertight unit 6.

With reference to FIGS. 1, 3 and 4, the chuck member 2 extends along and surrounds an axis (L), and includes a chuck section 21 to be held by the spindle device 8, a cutter section 23 opposite to the chuck section 21 along the axis (L), and a grip section 22 interconnecting the chuck section 21 and the cutter section 23. The grip section 22 has a first externally engaging portion 221 formed on an outer peripheral surface thereof. The cutter section 23 has a second externally engaging portion 231 formed on an outer peripheral surface thereof.

The collet member 3 is coaxially engaged with the cutter section 23 and is adapted for holding the cutting tool 7. In this embodiment, the collet member 3 is in the form of a collet formed with a plurality of slits 31 angularly spaced apart from one another and arranged around the axis (L). The cutter section 23 has a tapered inner peripheral surface which is fittingly engaged with part of the outer peripheral surface of the collet member 3. Hence, when the collet member 3 is moved toward the chuck section 21, the collet member 3 is pressed and converged by the inner peripheral surface of the cutter section 23 so as to generate a clamping force toward the axis (L) for holding the cutting tool 7.

The collet nut 4 surrounds and is engaged with the cutter section 23 of the chuck member 2, and is movable relative to the cutter section 23 in a direction of the axis (L). The collet nut 4 permits the cutting tool 7 to extend therethrough such that, by moving engagement of the collet nut 4 toward the chuck section 21, the collet member 3 is pressed inwardly to tighten the cutting tool 7. The collet nut 4 has a base wall 41 and a surrounding wall 42 which extends along the direction of the axis (L) from a periphery of the base wall 41. The base wall 41 has a through hole 411 extending therethrough along the axis (L) for passing of the cutting tool 7, and an annular groove 412 surrounding the axis (L) and in communication with the through hole 411. The surrounding wall 42 has a first internally engaging portion 421 formed on an inner peripheral surface thereof. By virtue of the engagement of the second externally engaging portion 231 of the chuck member 2 with the first internally engaging portion 421 of the collet nut 4, the surrounding wall 42 is retained at the cutter section 23. In this embodiment, the second externally engaging portion 231 and the first internally engaging portion 421 are in the form of screw threads so as to be threadedly engaged with each other.

The grip sleeve 5 is removably disposed on the grip section 22 of the chuck member 2 to be gripped by an auto-tool device or a robotic arm. The grip sleeve 5 has a grip groove 51 which is recessed from an outer peripheral wall thereof and surrounds the axis (L), and a second internally engaging portion 52 which is formed on an inner peripheral surface thereof to be engaged with the first externally engaging portion 221 of the chuck member 2. In this embodiment, the first externally engaging portion 221 and the second internally engaging portion 52 are in the form of screw threads to be threadedly engaged with each other.

The watertight unit 6 is disposed on the collet nut 4, and includes a first seal member 61 which is disposed in the annular groove 412 to be interposed between the collet nut 4 and the cutting tool 7 for preventing fluid passing between the collet nut 4 and the cutting tool 7, and a second seal member 62 which surrounds the axis (L) and is interposed between the collet member 3 and the surrounding wall 42 of the collet nut 4 for preventing fluid passing between the collet member 3 and the surrounding wall 42. With the watertight unit 6, when the cutting tool 7 with a coolant through spindle is adapted, the coolant may only flow through the discharge ports of the cutting tool 7. When the cutting tool 7 without a coolant through spindle is adapted, the coolant remains inside the chuck member 2 and the collet member 3 so as to absorb the shock applied to the cutting tool 7, thereby achieving a shock absorbing effect.

It is noted that each of the collet member 3, the collet nut 4 and the grip sleeve 5 is made of an engineering plastic material, such as nylon added with glass fiber, polyoxymethylene (POM), etc. In this embodiment, the collet member 3 is made of polyoxymethylene (POM), and the collet nut 4 and the grip sleeve 5 are made of nylon added with glass fiber. In other embodiments, the collet member 3 may be made of nylon added with a glass fiber material, or nylon added with glass fiber and a polyoxymethylene material, and each of the collet nut 4 and the grip sleeve 5 may be made of a polyoxymethylene material, or nylon added with glass fiber and a polyoxymethylene material.

In practice, the cutting tool 7 is inserted into the collet nut 4 and the collet member 3 and is adjusted to an appropriate position, and the collet nut 4 is then being operated. By virtue of the engagement of the second externally engaging portion 231 with the first internally engaging portion 421, the collet nut 4 is moved along the axis (L) relative to the chuck member 2 and is retained at the cutter section 23. With the base wall 41 abutting against an end of the collet member 3 distal from the chuck member 2 to prevent removal of the collet member 3 from the chuck member 2, a pressing force is provided to press the collet member 3 toward the chuck section 21 during movement of the collet nut 4 toward the chuck section 21 so as to clamp the cutting tool 7. Furthermore, the chuck section 21 has a selected chuck suiting for the spindle device 8 so that the cutting tool 7 is firmly mounted on the spindle device 8 and driven by the spindle device 8 through the chuck member 2. Additionally, the grip sleeve 5 is securely disposed on the grip section 22 and has the grip groove 51 to be gripped by an auto-tool device or a robotic arm.

As compared with the conventional collet chuck holder, with the collet nut 4 being made of nylon added with glass fiber and having a hardness and a structural strength lower than those of steel, the collet nut 4 may be easily broken by vibration and impact generated by the operational processes. Once the collet nut 4 is broken, the tightening structure of the assembled cutting tool 7, the collet nut 4 and the collet member 3 is broken, so a force applied to the cutting tool 7 and transmitted to the spindle device 8 is reduced. Therefore, damage to the spindle device 8 is reduced. Moreover, the weight, manufacturing costs and manufacturing time of the collet nut 4 are lower than those of the collet nut made of steel. In addition, cost for replacement of the collet nut 4 is reduced. As compared with the grip sleeve 5 integrally formed with a collet chuck holder made of steel, the grip sleeve 5 of the disclosure made of nylon added with glass fiber is lighter in weight and has lower processing cost, so the cost of the material and maintenance costs are lower.

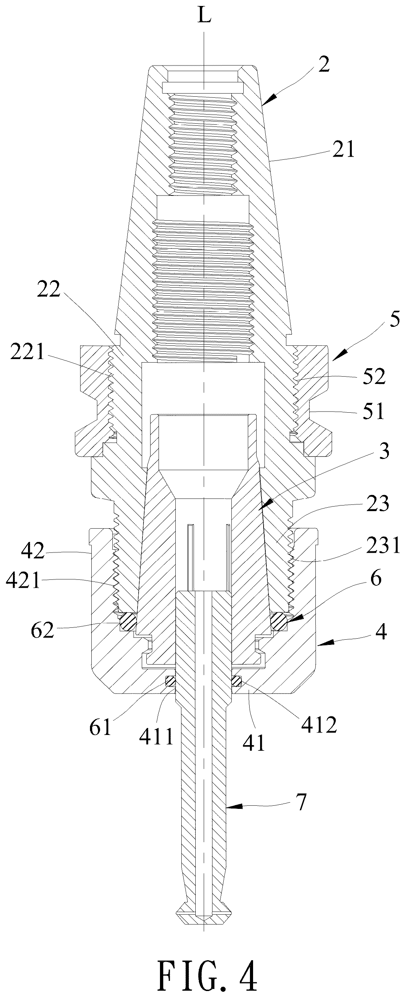

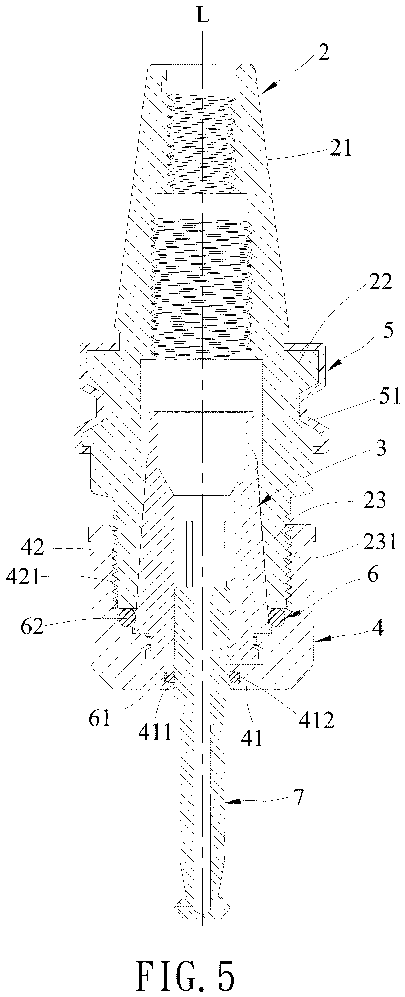

With reference to FIG. 5, in another embodiment, the shock-absorbing collet chuck holder also includes a chuck member 2, a collet member 3, a collet nut 4, a grip sleeve 5 and a watertight unit 6. The grip sleeve 5 is integrally formed with the grip section 22 of the chuck member 2 by insert molding and is formed over an outer peripheral surface of the grip section 22. Thus, the material cost of the grip section 22 of the chuck member 2 may be reduced. Furthermore, a step of forming the first externally engaging portion 221 of the chuck member 2 and the second internally engaging portion 52 of the grip sleeve 5 (see FIG. 4) is eliminated, and a step of fastening the grip sleeve 5 to the grip section 22 is eliminated.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A shock-absorbing collet chuck holder mountable on a spindle device (8) for holding a cutting tool (7), comprising:
a chuck member (2) extending along and surrounding an axis (L), said chuck member (2) including a chuck section (21) to be held by the spindle device (8), a cutter section (23) opposite to said chuck section (21) along the axis (L), and a grip section (22) interconnecting said chuck section and said cutter section;
a collet member (3) coaxially engaged with said cutter section (23) and adapted for holding the cutting tool (7); and
a collet nut (4) surrounding and engaged with said cutter section (23), and movable relative to said cutter section (23) in a direction of the axis (L) and permitting the cutting tool (7) to extend therethrough such that, by moving engagement of said collet nut (4) toward said chuck section (21), said collet member (3) is pressed inwardly to tighten the cutting tool (7), **characterized in that**:
said collet nut (4) is made of an engineering plastic material; and
said shock-absorbing collet chuck holder further comprises a grip sleeve (5) disposed on said grip section (22) to be gripped by an auto-tool device or a robotic arm, said grip sleeve (5) being made of an engineering plastic material.

2. The shock-absorbing collet chuck holder as claimed in claim 1, wherein said collet nut (4) has a base wall (41) and a surrounding wall (42) which extends along the direction of the axis (L) from a periphery of said base wall (41), said base wall (41) having a through hole (411) extending therethrough along the axis (L) for passing of the cutting tool (7), said surrounding wall (42) being retainingly engaged with said cutter section (23).

3. The shock-absorbing collet chuck holder as claimed in claim 2, further comprising a watertight unit (6) disposed on said collet nut (4), said base wall (41) having an annular groove (412) which surrounds the axis (L) and is in communication with said through hole (411), said watertight unit (6) including a first seal member (61) which is disposed in said annular groove (412) to be interposed between said collet nut (4) and the cutting tool (7).

4. The shock-absorbing collet chuck holder as claimed in claim 3, wherein said watertight unit (6) further includes a second seal member (62) which surrounds the axis (L) and is interposed between said collet member (3) and surrounding wall (42) of said collet nut (4).

5. The shock-absorbing collet chuck holder as claimed in claim 1, wherein said collet nut (4) is made of at least one of nylon added with glass fiber and a polyoxymethylene (POM) material, and said grip sleeve (5) is made of at least one of nylon added with glass fiber and a polyoxymethylene (POM) material.

6. The shock-absorbing collet chuck holder as claimed in claim 1, wherein said collet member (3) is made of an engineering plastic material.

7. The shock-absorbing collet chuck holder as claimed in claim 6, wherein said collet member (3) is made of at least one of nylon added with glass fiber and a polyoxymethylene (POM) material.

8. The shock-absorbing collet chuck holder as claimed in claim 1, wherein said grip sleeve (5) has a grip groove (51) which is recessed from an outer peripheral wall thereof and surrounds the axis (L).

9. The shock-absorbing collet chuck holder as claimed in claim 1, wherein said grip sleeve (5) is integrally formed with said grip section (22) of said chuck member (2) by insert molding and is formed over an outer peripheral surface of said grip section (22).

10. The shock-absorbing collet chuck holder as claimed in claim 1, wherein said grip section (22) of said chuck member (2) has an externally engaging portion (221) formed on an outer peripheral surface thereof, said grip sleeve (5) having an internally engaging portion (52) which is formed on an inner peripheral surface thereof and removably engaged with said externally engaging portion (221).
